# EUROPÄISCHE PATENTSCHRIFT

(11) **EP 3 383 722 B1**
(45) Veröffentlichungstag und Bekanntmachung des Hinweises auf die Patenterteilung: **01.04.2020**
(21) Anmeldenummer: 17705135.6
(22) Anmeldetag: 15.02.2017
(51) Int. Cl.: B61D 19/02, B60J 9/02, A61G 3/06, B60P 1/02, B61D 23/00, F04B 39/00

(54) **EVAKUIERUNGSEINRICHTUNG**
EVACUATION DEVICE
DISPOSITIF D'ÉVACUATION

(30) Priorität: 03.03.2016 AT 501722016
(43) Veröffentlichungstag der Anmeldung: 10.10.2018
(73) Patentinhaber: Siemens Mobility Austria GmbH, 1210 Wien (AT)
(72) Erfinder: KIRALY, Andras, 1220 Wien (AT)
(74) Vertreter: Deffner, Rolf
(86) Internationale Anmeldenummer: PCT/EP2017/053366
(87) Internationale Veröffentlichungsnummer: WO 2017/148703

(56) Entgegenhaltungen:
- EP-A2- 0 184 745
- EP-A2- 1 090 837
- DE-A1-102007 028 283
- GB-A- 2 420 105
- GB-A- 2 514 673
- US-A- 3 692 144

## Beschreibung

### Technisches Gebiet

Die Erfindung betrifft eine Evakuierungseinrichtung für Fahrzeugpassagiere.

### Stand der Technik

Um im Notfällen Passagiere eines Fahrzeugs, insbesondere eines Schienenfahrzeugs evakuieren zu können, werden üblicherweise über die für den normalen Betrieb vorgesehenen Einstiege genutzt. Dies stellt bei Vollbahnen einen durchführbaren Evakuierungsweg dar, versagt jedoch oft bei Nahverkehrsbahnen, insbesondere bei U-Bahnen. Ist seitlich des Schienenfahrzeugs kein Platz, beispielsweise in Tunneln, so verbleibt als einziger Evakuierungsweg ein stirnseitiger Ausstieg aus dem Schienenfahrzeug. Dabei ist der beträchtliche Niveauunterschied zwischen dem Passagierraumboden und dem Gleisbett zu beachten. Zur Überbrückung des Niveauunterschieds können beispielsweise Treppen, Leitern oder Rampen eingesetzt werden. Die Patentschriften DE 4433371 oder DE 4108575 offenbaren Beispiele für solche Rampen. Die Patentschrift GB 2 420 105 A zeigt die Anwendung einer bei Flugzeugen gebräuchlichen aufblasbaren Notrutsche bei einem Schienenfahrzeug. Für Passagiere ohne Bewegungseinschränkungen bieten Lösungen aus dem Stand der Technik eine Vielzahl unterschiedlicher Evakuierungseinrichtung. Passagiere mit Bewegungseinschränkungen, insbesondere Rollstuhlfahrer können mit diesen Einrichtungen jedoch nicht sicher evakuiert werden und sind auf entsprechend ausgerüstetes und geschultes Einsatzpersonal angewiesen. Rollstühle können, insbesondere bei elektrisch angetriebenen Ausführungen ein hohes Gewicht aufweisen, sodass nach der betreffenden Norm TSI PRM von 300kg auszugehen ist und die Evakuierungseinrichtung für dieses Gewicht zu bemessen ist. Für die Evakuierung von Rollstuhlfahrern können beispielsweise Aufzüge oder Hubplattformen eingesetzt werden, welche kraftunterstützt oder manuell bedienbar sind. Diese Lösungen bedingen jedoch einen sehr großen Bauraumbedarf. Konventionelle Rampen müssten für eine Evakuierung von Rollstuhlfahrern eine geringere Steigung aufweisen als bei Fluchtrampen derzeit gebräuchlich ist. Derart lange Rampen könnten jedoch nur sehr aufwendig mit der erforderlichen Festigkeit hergestellt werden und würden ebenso einen sehr großen Bauraumbedarf bedingen.

### Darstellung der Erfindung

Der Erfindung liegt daher die Aufgabe zugrunde, eine Evakuierungseinrichtung anzugeben, welche für die Evakuierung von Rollstuhlfahrern geeignet ist und dabei einen geringen Bauraumbedarf aufweist.

Die Aufgabe wird durch eine Evakuierungseinrichtung mit den Merkmalen des Anspruchs 1 gelöst. Vorteilhafte Ausgestaltungen sind Gegenstand untergeordneter Ansprüche.

Dem Grundgedanken der Erfindung nach ist eine Evakuierungseinrichtung für die Evakuierung von Personen aus einem Fahrzeug beschrieben, wobei die Evakuierungseinrichtung eine Mehrzahl von aufeinander geschichteten aufblasbaren Kammern mit rechteckigen Horizontalquerschnitt umfasst, welche voneinander pneumatisch getrennt sind und welche von einen aufblasbaren Stützeinrichtung an drei Seiten ihres Umfangs umgeben sind und wobei die oberste Kammer eine betretbare Fläche aufweist und die Kammern und die Stützeinrichtung durch Druckgas in ihre Gebrauchslage gebracht werden können und wobei ein Absenken der betretbaren Fläche durch sequentielles entlüften der aufblasbaren Kammern erfolgt.

Dadurch ist der Vorteil erzielbar, Passagiere, im Besonderen Rollstuhlfahrer über eine absenkbare Platte aus einem Fahrzeug evakuieren zu können. Die Evakuierungseinrichtung umfasst dazu eine Mehrzahl an aufblasbaren Kammern aus flexiblen Material, welche aufeinander Geschichtet sind und deren oberste Fläche betretbar ausgeführt ist. Diese aufblasbaren Kammern werden im Evakuierungsfall mit Druckgas gefüllt, worauf die betretbare Fläche in eine Höhe gelangt, die aus dem Fahrzeug unmittelbar betretbar ist oder welche durch einen Rollstuhlfahrer befahrbar ist. Ein Absenken der betretbaren Fläche erfolgt durch das Ablassen des Druckgases aus den aufblasbaren Kammern. Dabei ist es wesentlich, eine bestimmte Ablaßsequenz einzuhalten, bei welcher die aufblasbaren Kammern von der untersten Kammer her nacheinander entlüftet werden. Dadurch kann sichergestellt werden, dass die oberste aufblasbare Kammer bis zum vollständigen Entlüften aller darunterliegenden Kammern gefüllt bleibt, sodass die betretbare Fläche nutzbar und stabil bleibt. Dies ist wesentlich, da sonst die oberste aufblasbare Kammer weich würde und ein sicherer Stand für Personen bzw. Rollstuhlfahrer nicht gegeben wäre. Erst wenn alle darunterliegenden Kammern vollständig entlüftet sind kann auch die oberste aufblasbare Kammer entlüftet werden, da die dabei entstehende Instabilität aufgrund der geringen verbliebenen Resthöhe irrelevant ist.

Eine Evakuierungseinrichtung aus aufblasbaren Kammern alleine würde keine stabile betretbare Fläche bieten und ein Betreten sehr gefährlich machen. Aus diesem Grund ist erfindungsgemäß eine aufblasbare Stützeinrichtung vorgesehen, welche die aufblasbaren Kammern an drei Seiten ihres Umfangs umgibt. Diese Stützeinrichtung wird beim Aufbau der
Evakuierungseinrichtung gleichzeitig mit den Kammern mit Druckgas beaufschlagt, sie bildet eine Wesentlichen U-förmige Konstruktion und schützt die Kammern im aufgeblasenen Zustand vor Instabilität.
Es ist besonders vorteilhaft, die aufblasbare Stützeinrichtung zeitlich vor den aufblasbaren Kammern zu befüllen. Solcherart kann sichergestellt werden, dass die einzelnen Kammern ihre Gebrauchsposition einnehmen und sich nicht untereinander bzw. mit der Stützeinrichtung verkeilen.

Das erforderliche Druckgas kann beispielsweise mittels eines Gasgenerators, ähnlich den bei KFZ Airbags gebräuchlichen, erzeugt werden. Alternativ dazu ist als Gasquelle auch eine Druckgasflasche eingesetzt werden.
Der Ablauf der Auslösung und des sequentiellen Ablassen des Druckgases ist durch eine Ablaufsteuerung vorzunehmen, welche vorzugsweise als elektronische Schaltung ausgeführt ist. Weiters kann diese Steuerung auch als pneumatische Ablaufsteuerung ausgeführt werden, wodurch eine sonst erforderliche elektrische Energiequelle für die Steuerung entfallen kann.

Unabhängig von der Art der eingesetzten Steuerung sind mindestens zwei Signale der Steuerung zuzuführen, ein erstes Signal zur Bewirkung des Aufblasvorgangs und ein zweites Signal zur Bewirkung des Entlüftungsvorgangs. Diese Signale können als elektrische Signale vorliegen, oder als mechanische Signale, beispielsweise mittels Bowdenzüge an die Steuerungsübermittelt werden.

Es ist vorteilhaft, die Evakuierungseinrichtung mit einer manuell betätigbaren Notentlüftung auszustatten, welche auch bei Ausfall der Steuerung ein Entlüften der aufblasbaren Kammern ermöglicht.

Die aufblasbaren Kammern und die Stützeinrichtung sind aus flexiblen, gasdichten Gewebe anzufertigen, welches beispielsweise bei Notrutschen von Flugzeugen eingesetzt wird. Dabei ist insbesondere an den Kontaktflächen zwischen der Stützeinrichtung und den Kammern auf eine geeignete Materialpaarung zu achten, welche einen entsprechend niedrigen Reibkoeffizient aufweist um die Bewegung der Kammern in der Stützeinrichtung nicht zu behindern.

Die Stützeinrichtung und die aufblasbaren Kammern sind mittels geeigneter internen Verstrebungen so auszuführen, dass sie in mit Druckgas beaufschlagtem Zustand die erforderliche Form einnehmen. Die obere Fläche der obersten aufblasbaren Kammer ist als betretbare Fläche auszuführen, wozu sie beispielsweise mit einem rutschhemmenden Belag auszustatten ist. Weiters ist es vorteilhaft, die betretbare Fläche mit einer Rillenstruktur in Auffahrrichtung für einen Rollstuhl auszustatten, wodurch eine bessere Stabilisierung des Rollstuhls während des Absenkvorgangs erzielt wird.

Weiters ist es vorteilhaft, die oberste aufblasbare Kammer mit einer hochgezogenen Kante auszustatten, welche in vertikaler Richtung aus der betretbaren Fläche herausragt und welche an der der Auffahrseite abgewandten Kante der betretbaren Fläche angeordnet ist. Dadurch ist der Vorteil erzielbar, ein vorzeitiges Abrollen von der obersten aufblasbaren Kammer und einen Absturz eines Rollstuhls verhindern zu können. Nach erfolgtem vollständigen Absenken ist diese hochgezogenen Kante leicht überrollbar.

Es ist vorteilhaft, die erfindungsgemäße Evakuierungseinrichtung als Evakuierungssystem auszuführen, bei welchem die Anordnung der Evakuierungseinrichtung in einem Fahrzeug so gestaltet ist, dass zur Aktivierung als erster Bedienschritt ein manueller mechanischer Vorgang auszulösen ist, beispielsweise ein Lösen einer mechanischen Verriegelung oder ein Ausschwenken eines Trägers. Aus dieser erfolgten Bewegung kann die Auslösung des Aufbauvorgangs der Evakuierungseinrichtung erfolgen, beispielsweise mittels eines Gestänges oder eines Bowdenzugs. Dies ist insbesondere bei Schienenfahrzeugen vorteilhaft, wo bei Evakuierungen an der Stirnseite des Fahrzeugs eine Überbrückung der aus dem Fahrzeug axial herausragenden Kupplung erfolgen muß. Dabei kann eine stirnseitig angeordnete, schwenkbare Platte mit einer Evakuierungseinrichtung ausgestattet werden. Nach dem Ausschwenkvorgang der Platte kann automatisch die Auslösung der Evakuierungseinrichtung erfolgen.

In weiterer Fortbildung der Erfindung ist es empfehlenswert, den Gasvorrat und die Steuerung so zu bemessen, dass ein zweiter und ggf. weitere Evakuierungsvorgänge erfolgen können.

Gegenständliche Erfindung eignet sich auch für den mobilen Einsatz, bei welchem eine Evakuierungseinrichtung so ausgeführt ist, dass sie durch Rettungspersonal manuell transportabel ist. Dabei ist die Evakuierungseinrichtung in ihrer drucklosen Ausgangslage so zu gestalten, dass entsprechende Tragehilfsmittel wie Griffe ergonomisch angeordnet sind. Eine solche tragbare Evakuierungseinrichtung wird typischerweise von ausgebildeten Rettungspersonal angewandt, sodass auch kompliziertere Bedienvorgänge zumutbar sind. Insbesondere eignen sie sich dabei mit größerem Gasvorrat für mehrere Evakuierungsvorgänge ausgestattet zu sein.

### Kurzbeschreibung der Zeichnungen

Es zeigen beispielhaft:
- **Fig.1**: Evakuierungseinrichtung, Schrägansicht.
- **Fig.2**: Evakuierungseinrichtung.
- **Fig.3**: Evakuierungssequenz, Schritt 1.
- **Fig.4**: Evakuierungssequenz, Schritt 2.
- **Fig.5**: Evakuierungssequenz, Schritt 3.
- **Fig.6**: Evakuierungssequenz, Schritt 4.
- **Fig.7**: Evakuierungssequenz, Schritt 5.
- **Fig.8**: Evakuierungseinrichtung, pneumatisches Schaltbild.

### Ausführung der Erfindung

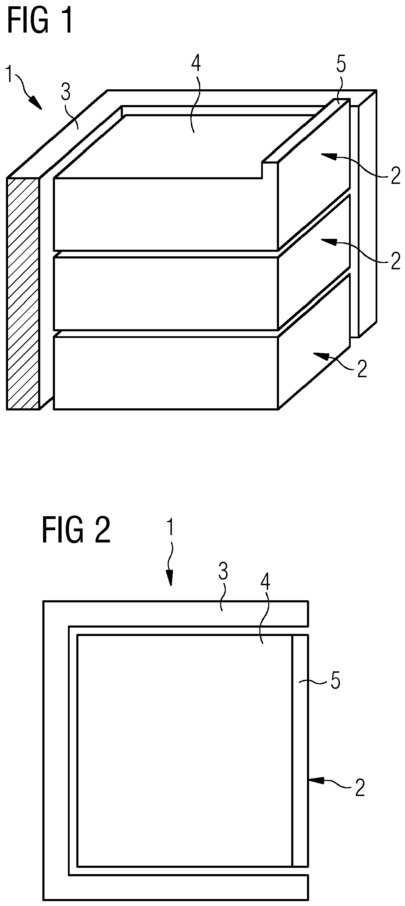

**Fig.1** zeigt beispielhaft und schematisch eine Evakuierungseinrichtung in einer Schrägansicht. Eine Evakuierungseinrichtung 1 umfasst eine Mehrzahl an aufblasbaren Kammern 2 und eine Stützeinrichtung 3, welche die aufblasbaren Kammern 2 an drei Seiten ihres Umfangs umschließt. Die Evakuierungseinrichtung 1 befindet sich in ihrer Gebrauchslage, nachdem die aufblasbaren Kammern 2 und die Stützeinrichtung 3 mit Druckgas beaufschlagt sind. In gezeigtem Ausführungsbeispiel sind drei aufblasbare Kammern 2 dargestellt, welche aufeinander geschichtet angeordnet sind und welche einen rechteckigen Horizontalquerschnitt umfassen. Die Stützeinrichtung 3 ist geschnitten dargestellt um den Schichtaufbau der aufblasbaren Kammern optimal zeigen zu können. Die oberste der drei aufblasbaren Kammern 2 ist mit einer betretbaren Fläche 4 ausgestattet und weist eine hochgezogene Kante 5 auf. Diese ist gegenüber der Auffahrseite, über welche ein Rollstuhl im Evakuierungsfall auffährt angeordnet. Weitere Bauteile wie eine Steuerung oder eine Gasquelle sind in dieser Prinzipdarstellung nicht gezeigt.

**Fig.2** zeigt beispielhaft und schematisch eine Evakuierungseinrichtung in einer Ansicht von oben. Es ist die Evakuierungseinrichtung 1 aus Fig.1 in einer Ansicht von oben dargestellt. Dabei ist insbesondere die Ausführung der Stützeinrichtung 3 erkennbar, welche die aufblasbaren Kammern 2 an drei Seiten ihres Umfangs umgibt.

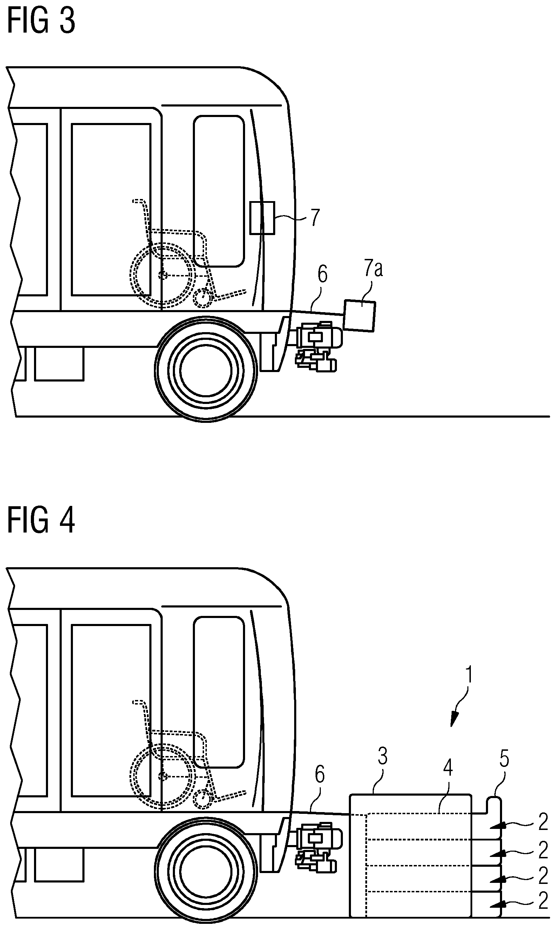

**Fig.3** zeigt beispielhaft und schematisch eine Evakuierungssequenz, Schritt 1. Es ist eine seitliche Ansicht auf ein Schienenfahrzeug dargestellt, welches an seiner Stirnseiten eine Evakuierungseinrichtung 7 in ihrer verstauten Position umfasst. Diese Evakuierungseinrichtung ist an einer Schwenkeinrichtung 6 angeordnet, welche um einen am Passagierraumboden angeordneten Drehpunkt schwenkbar ist. Bei einer Evakuierungssituation ist eine stirnseitig angeordnete Notausstiegstür zu öffnen und die Evakuierungseinrichtung 7 in ihre ausgeschwenkte Position 7a zu klappen. Dabei dient die Schwenkeinrichtung 6 auch als Überbrückung der vor dem Fahrzeug herausragenden Kupplung.

**Fig.4** zeigt beispielhaft und schematisch eine Evakuierungssequenz, Schritt 2. Es ist das Schienenfahrzeug aus Fig.3 dargestellt, wobei die Evakuierungseinrichtung 7 bereits in Gebrauchslage befindlich ist, dh. die aufblasbaren Kammern 2 und die Stützeinrichtung 3 sind bereits unter Druckgas gesetzt. Dadurch ist auch die hochgezogene Kante 5 aufgerichtet und die Evakuierungseinrichtung 7 ist einsatzbereit. Das Auslösen des Aufblasvorgangs kann dabei durch das Erreichen der Endposition der Schwenkeinrichtung 6 bewirkt werden.

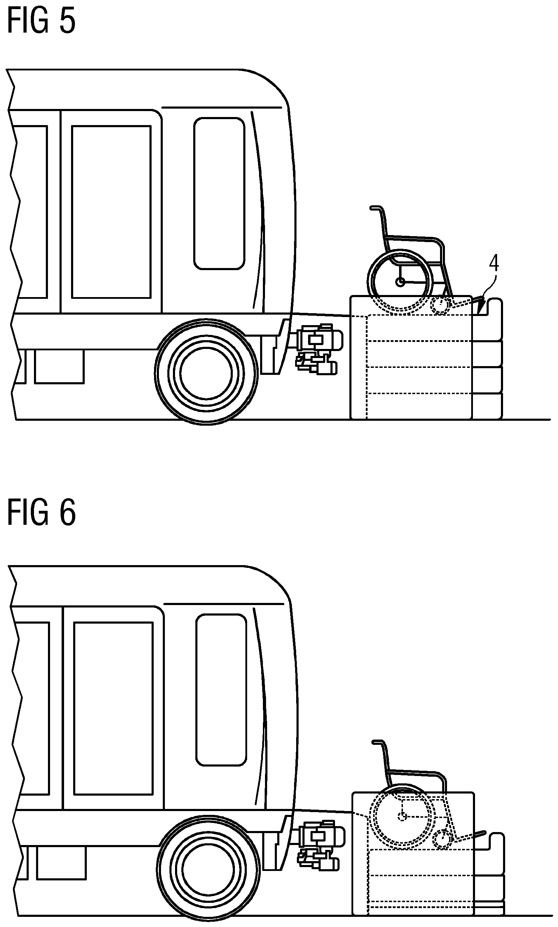

**Fig.5** zeigt beispielhaft und schematisch eine Evakuierungssequenz, Schritt 3. Es ist das Schienenfahrzeug aus Fig.4 dargestellt, wobei ein Rollstuhl auf die betretbare Fläche 4 aufgefahren ist.

**Fig.6** zeigt beispielhaft und schematisch eine Evakuierungssequenz, Schritt 4. Es ist das Schienenfahrzeug aus Fig.5 dargestellt, wobei der Absenkvorgang sich ca. in der Hälfte seines Ablaufs befindet.

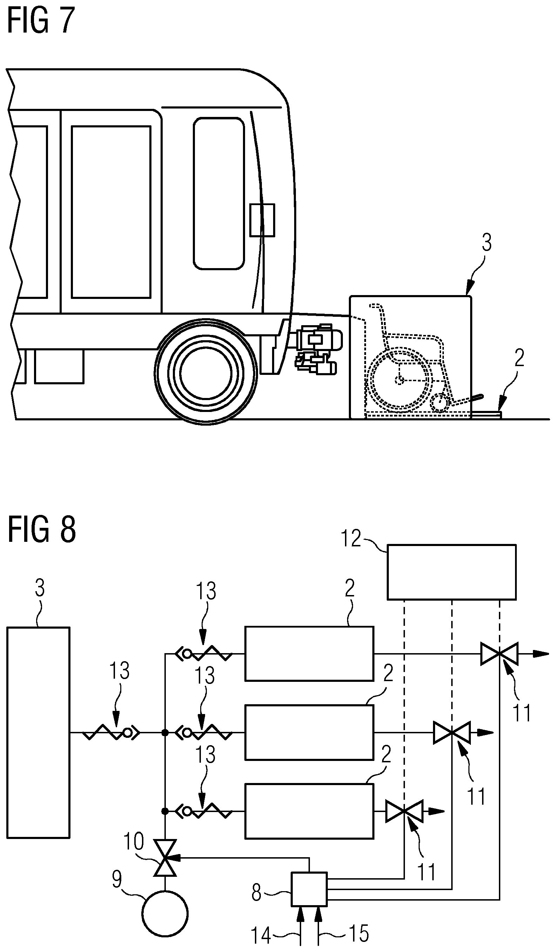

**Fig.7** zeigt beispielhaft und schematisch eine Evakuierungssequenz, Schritt 5. Es ist das Schienenfahrzeug aus Fig.6 dargestellt, wobei der Absenkvorgang abgeschlossen ist und alle aufblasbaren Kammern 2 entlüftet sind. Die Stützeinrichtung 3 ist weiterhin unter Druckgas gesetzt.

**Fig.8** zeigt beispielhaft und schematisch ein pneumatisches Schaltbild einer Evakuierungseinrichtung. Es sind die zur Be- und Entlüftung einer Evakuierungseinrichtung 1, wie die in den Fig. 1 und 2 dargestellt ist gezeigt, mittels welcher die Bewegungsabfolge für eine Evakuierung eines Rollstuhlfahrers bewirkt wird. Es sind drei aufblasbare Kammern 2 und eine aufblasbare Stützeinrichtung 3 vorgesehen, welcher durch Druckgas aus einer Druckgasflasche 9 befüllbar sind. Dazu ist in der Zuleitung zu den Kammern 2,3 ein Belüftungsventil 10 angeordnet. In jeder einzelnen Zuleitung zu jeder Kammer 2 und der Stützeinrichtung 3 ist ein Rückschlagventil 13 angeordnet, welches einen Gasfluß ausschließlich in Richtung der Kammern 2 bzw. der Stützeinrichtung 3 erlaubt. Solcherart wird ein Druckausgleich zwischen den Kammern 2 und der Stützeinrichtung 3 verhindert, was für einen korrekten Ablaßvorgang erforderlich ist. Jede Kammer 2 ist mit einem Entlüftungsventil 11 ausgestattet, über welches das in der jeweiligen Kammer 2 befindliche Druckgas ausströmen kann. Die Ventile 10, 11 sind elektrisch ansteuerbar ausgeführt und in stromlosen Zustand geschlossen. Eine elektronische Steuerung 8 ist elektrisch mit den Ventilen 10, 11 verbunden und weist zwei Steuereingänge 14, 15 auf. Dabei ist ein Eingang 14 für die Auslösung der Belüftung vorgesehen und ein Eingang 15 für das Auslösen der Entlüftung. Weiters umfasst die elektronische Steuerung 8 eine elektrische Energiequelle um von der Fahrzeugenergie unabhängig einen Evakuierungsvorgang auslösen zu können. Bei der Auslösung eines Evakuierungsvorgangs steuert dabei die elektronische Steuerung 8 in einem ersten Schritt das Belüftungsventil 10 an, sodass die Kammern 2 und die Stützeinrichtung 3 mit Druckgas beaufschlagt werden. Diese Auslösung erfolgt mittels eines an den Steuereingang 14 angelegten Signals, welches beispielsweise durch das vollständige Ausklappen einer Schwenkeinrichtung 6 ermittelt werden kann oder welches durch eine manuell zu betätigende Schaltvorrichtung gewonnen werden kann. Die Auslösung des Absenkvorgangs erfolgt durch manuelles Auslösen, wobei ein Signal an den Steuereingang 15 angelegt wird. Dadurch wird in der Steuereinrichtung 8 die Absenksequenz ausgelöst, welche ein zeitlich aufeinander abgestimmtes Öffnen der Entlüftungsventile 11 bewirkt. Dabei wird zuerst das Entlüftungsventil 11 der untersten Kammer 2 geöffnet bis diese Kammer vollständig entlüftet ist. Die dazu erforderliche Zeit ist insbesondere von der auf die begehbare Fläche wirkenden Gewichtskraft abhängig und auf eine minimal vorgesehene Gewichtskraft auszulegen. Nach dem Verstreichen dieser Zeitspanne steuert die elektronische Steuerung 8 das nächste, weiter oben liegende Entlüftungsventil 11 an. Diese Sequenz wird bis zum Entlüften aller aufblasbaren Kammern 2 fortgeführt. Für den Fall des Versagens der Steuereinrichtung 8 ist eine manuelle Notentlüftung 12 vorgesehen, welche mechanisch auf die Entlüftungsventile 11 wirkt und diese zum unmittelbaren, gleichzeitigen Entlüften der Kammern 2 stellen kann. Weiters kann auch eine, in Fig.8 nicht dargestellte manuelle Notbelüftung vorgesehen sein, welche das Belüftungsventil 10 mechanisch ansteuert, sodass ein kompletter Evakuierungsvorgang auch manuell ausführbar ist.

### Liste der Bezeichnungen

- 1: Evakuierungseinrichtung
- 2: Aufblasbare Kammer
- 3: Aufblasbare Stützeinrichtung
- 4: Betretbare Fläche
- 5: Hochgezogene Kante
- 6: Schwenkeinrichtung
- 7: Evakuierungseinrichtung verstaut
- 7a: Evakuierungseinrichtung ausgeschwenkt
- 8: Elektronische Steuerung
- 9: Druckgasflasche
- 10: Belüftungsventil
- 11: Entlüftungsventil
- 12: Manuelle Notentlüftung
- 13: Rückschlagventil
- 14: Auslösung Belüftung
- 15: Auslösung Entlüftung

## Patentansprüche

1. Evakuierungseinrichtung (1) für die Evakuierung von Personen aus einem Fahrzeug,
**dadurch gekennzeichnet, dass**
die Evakuierungseinrichtung (1) eine Mehrzahl von aufeinander geschichteten aufblasbaren Kammern (2) mit rechteckigen Horizontalquerschnitt umfasst, welche voneinander pneumatisch getrennt sind und welche von einen aufblasbaren Stützeinrichtung (3) an drei Seiten ihres Umfangs umgeben sind und wobei die oberste Kammer (2) eine betretbare Fläche (4) aufweist und die Kammern (2) und die Stützeinrichtung (3) durch Druckgas in ihre Gebrauchslage gebracht werden können und wobei ein Absenken der betretbaren Fläche (4) durch sequentielles entlüften der aufblasbaren Kammern (2) erfolgt.

2. Evakuierungseinrichtung (1) nach Anspruch 1,
**dadurch gekennzeichnet, dass** die aufblasbaren Kammern (2) und die Stützeinrichtung (3) mittels eines Gasgenerators mit Druckgas befüllbar sind.

3. Evakuierungseinrichtung (1) nach Anspruch 1,
**dadurch gekennzeichnet, dass** die aufblasbaren Kammern (2) und die Stützeinrichtung (3) mittels eines Druckgasflasche mit Druckgas befüllbar sind.

4. Evakuierungseinrichtung (1) nach einem der Ansprüche 1 bis 3,
**dadurch gekennzeichnet, dass** das sequentielle Entlüften der aufblasbaren Kammern (2) mittels einer elektronischen Steuerung erfolgt.

5. Evakuierungseinrichtung (1) nach einem der Ansprüche 1 bis 3,
**dadurch gekennzeichnet, dass** das sequentielle Entlüften der aufblasbaren Kammern (3) mittels einer pneumatischen Ablaufsteuerung erfolgt.

6. Evakuierungseinrichtung (1) nach einem der Ansprüche 1 bis 5,
**dadurch gekennzeichnet, dass** die Evakuierungseinrichtung (1) eine manuelle Notentlüftung der aufblasbaren Kammern umfasst.

7. Evakuierungseinrichtung nach einem der Ansprüche 1 bis 6,
**dadurch gekennzeichnet, dass** die aufblasbare Stützeinrichtung zeitlich vor den aufblasbaren Kammern befüllt werden.

8. Evakuierungseinrichtung nach einem der Ansprüche 1 bis 7,
**dadurch gekennzeichnet, dass** die oberste aufblasbare Kammer eine hochgezogene Kante umfasst, welche in vertikaler Richtung aus der betretbaren Fläche herausragt.

## Claims

1. Evacuation device (1) for the evacuation of persons from a vehicle,
**characterised in that**
the evacuation device (1) comprises a plurality of inflatable chambers (2) layered one on top of the other with a rectangular horizontal cross-section, which are separated pneumatically from one another and which are surrounded by an inflatable supporting device (3) on three sides of their periphery and wherein the topmost chamber (2) has an accessible surface (4) and the chambers (2) and the supporting device (3) can be brought into their position of use by means of pressurised gas and wherein the accessible surface (4) is lowered by sequential ventilation of the inflatable chambers (2) .

2. Evacuation device (1) according to claim 1,
**characterised in that** the inflatable chambers (2) and the supporting device (3) can be filled with pressurised gas by means of a gas generator.

3. Evacuation device (1) according to claim 1,
**characterised in that** the inflatable chambers (2) and the supporting device (3) can be filled with pressurised gas by means of a pressurised gas bottle.

4. Evacuation device (1) according to one of claims 1 to 3,
**characterised in that** the sequential ventilation of the inflatable chambers (2) is carried out by means of an electronic controller.

5. Evacuation device (1) according to one of claims 1 to 3,
**characterised in that** the sequential ventilation of the inflatable chambers (3) is carried out by means of a pneumatic sequence controller.

6. Evacuation device (1) according to one of claims 1 to 5,
**characterised in that** the evacuation device (1) comprises a manual emergency ventilation of the inflatable chambers.

7. Evacuation device according to one of claims 1 to 6,
**characterised in that** the inflatable supporting device are filled before the inflatable chambers in terms of time.

8. Evacuation device according to one of claims 1 to 7,
**characterised in that** the topmost inflatable chamber comprises an elevated edge, which projects in the vertical direction out from the accessible surface.

## Revendications

1. Dispositif d'évacuation (1) permettant d'évacuer des personnes hors d'un véhicule, **caractérisé en ce que** le dispositif d'évacuation (1) comprend une pluralité de compartiments gonflables (2) à section transversale horizontale rectangulaire empilés les uns sur les autres, qui sont séparés pneumatiquement les uns des autres et qui sont entourés par un dispositif de support gonflable (3) sur trois côtés de leur circonférence, le compartiment (2) supérieur comportant une surface accessible (4), les compartiments (2) et le dispositif de support (3) pouvant être amenés par un gaz comprimé dans leur position de fonctionnement, et un abaissement de la surface accessible (4) se produisant en ventilant les compartiments gonflables (2) de manière séquentielle.

2. Dispositif d'évacuation (1) selon la revendication 1, **caractérisé en ce que** les compartiments gonflables (2) et le dispositif de support (3) peuvent être remplis de gaz comprimé au moyen d'un générateur de gaz.

3. Dispositif d'évacuation (1) selon la revendication 1, **caractérisé en ce que** les compartiments gonflables (2) et le dispositif de support (3) peuvent être remplis de gaz comprimé au moyen d'une bouteille de gaz comprimé.

4. Dispositif d'évacuation (1) selon l'une des revendications 1 à 3, **caractérisé en ce que** la ventilation séquentielle des compartiments gonflables (2) s'effectue au moyen d'une commande électronique.

5. Dispositif d'évacuation (1) selon l'une des revendications 1 à 3, **caractérisé en ce que** la ventilation séquentielle des compartiments gonflables (3) s'effectue au moyen d'un séquenceur pneumatique.

6. Dispositif d'évacuation (1) selon l'une des revendications 1 à 5, **caractérisé en ce que** le dispositif d'évacuation (1) comprend une ventilation manuelle d'urgence des compartiments gonflables.

7. Dispositif d'évacuation selon l'une des revendications 1 à 6, **caractérisé en ce que** le dispositif de support gonflable est rempli temporellement avant les compartiments gonflables.

8. Dispositif d'évacuation selon l'une des revendications 1 à 7, **caractérisé en ce que** le compartiment gonflable supérieur comprend un bord surélevé faisant saillie dans le sens vertical depuis la surface accessible.
